# EUROPÄISCHE PATENTSCHRIFT

(11) **EP 2 234 690 B1**
(45) Veröffentlichungstag und Bekanntmachung des Hinweises auf die Patenterteilung: **22.02.2017**
(21) Anmeldenummer: 08865782.0
(22) Anmeldetag: 04.12.2008
(51) Int. Cl.: B01D 29/52, B01D 35/16, B01D 35/153

(54) **FILTERANLAGE**
FILTER SYSTEM
DISPOSITIF DE FILTRAGE

(30) Priorität: 21.12.2007 DE 102007062101
(43) Veröffentlichungstag der Anmeldung: 06.10.2010
(73) Patentinhaber: MAHLE International GmbH, 70376 Stuttgart (DE)
(72) Erfinder: GRASS, Uwe, 70569 Stuttgart (DE); SCHMID, Mike, 72072 Tübingen (DE); WIDMAIER, Andreas, 71083 Herrenberg (DE)
(74) Vertreter: BRP Renaud & Partner mbB Rechtsanwälte Patentanwälte Steuerberater
(86) Internationale Anmeldenummer: PCT/EP2008/066750
(87) Internationale Veröffentlichungsnummer: WO 2009/080454

(56) Entgegenhaltungen:
- EP-A- 1 229 985
- CA-A1- 2 596 225
- GB-A- 2 389 806
- US-A1- 2006 186 031

## Beschreibung

Die vorliegende Erfindung betrifft eine Filteranlage zum Filtern einer Flüssigkeit einer Brennkraftmaschine und/oder eines Fahrzeugs, mit den Merkmalen des Oberbegriffs des Anspruchs 1. Die Erfindung betrifft außerdem eine Brennkraftmaschine bzw. ein Fahrzeug mit einer derartigen Filteranlage.

Aus der EP 1 229 985 B1 ist eine Filtereinrichtung bekannt, bei der es sich bevorzugt um ein Ölfilter zum Reinigen von Schmieröl, insbesondere für Verbrennungsmotoren von Kraftfahrzeugen, handelt. Die Filtereinrichtung weist ein Filtergehäuse zur Aufnahme eines ringförmigen Filterelements auf, wobei das Filtergehäuse einen rohseitigen Zulauf und einen reinseitigen Ablauf aufweist. Das Filterelement trennt im eingesetzten Zustand einen mit dem Zulauf kommunizierenden Rohraum von einem mit dem Ablauf kommunizierenden Reinraum. Ferner weist das Filtergehäuse der bekannten Filtereinrichtung einen mit dem Rohraum kommunizierenden Leerlauf auf, der für einen am Filterelement ausgebildeten, axial und exzentrisch abstehenden Zapfen eine Zapfenaufnahme bildet, in die der Zapfen im eingesetzten Zustand des Filterelements eingesteckt ist. Der Zapfen verschließt somit den Leerlauf, wenn das Filterelement ordnungsgemäß in das Filtergehäuse eingesetzt ist. Zum vereinfachten Auffinden und Einführen des Zapfens in die Zapfenaufnahme ist bei der bekannten Filtereinrichtung am Gehäuse eine konzentrisch angeordnete und schraubenförmig ansteigende bzw. abfallende Rampe vorgesehen, wobei die durch einen Einlassbereich des Leerlaufs gebildete Zapfenaufnahme zwischen einem unteren Rampenende und einem oberen Rampenende angeordnet ist. Beim Aufschrauben eines Deckels, mit dem das Filterelement zusammen eingesetzt bzw. eingeschraubt wird, findet der Zapfen durch die Drehbewegung des Filterelements und durch das Abgleiten des Zapfens entlang der Rampe selbsttätig die Zapfenaufnahme, kann darin eindringen und den Leerlauf verschließen. Bei einer besonders vorteilhaften Ausführungsform der bekannten Filtereinrichtung können die Rampe und der Zapfen nach dem Schlüssel-Schloss-Prinzip zusammenwirken, so dass nur ein mit einem an die Rampe adaptierten Zapfen versehenes Filterelement so mit dem Gehäuse der bekannten Filtereinrichtung verwendbar ist, dass der Zapfen beim Aufschrauben des Deckels selbsttätig die Zapfenaufnahme findet und den Leerlauf verschließt.

Bei einer Brennkraftmaschine bzw. bei einem Kraftfahrzeug ist es grundsätzlich möglich, dass mehrere derartige Filtereinrichtungen vorgesehen sind, beispielsweise um einerseits Schmieröl und andererseits Kraftstoff filtern zu können. Dabei können diese Filtereinrichtungen prinzipiell relativ ähnlich aufgebaut sein, so dass es grundsätzlich zu Verwechslungen der Filterelemente kommen kann. Ein für das Filtern von Kraftstoff vorgesehenes Filterelement ist aufgrund seines Filtermaterials jedoch nicht für die Reinigung von Schmieröl geeignet und umgekehrt. Bei der Verwendung eines falschen Filterelements erhöht sich die Gefahr einer Beschädigung der Brennkraftmaschine bzw. eines beliebigen anderen Systems, das mit der zu reinigenden Flüssigkeit versorgt wird.

Aus der GB 2 389 806 A ist eine gattungsgemäße Filteranlage bekannt. Die Filteranlage weist ein ringförmiges erstes Filterelement, das in einem ersten Filterraum eine Rohseite von einer Reinseite trennt und das einen bezüglich einer Längsmittelachse des ersten Filterelements exzentrisch und axial abstehenden ersten Zapfen aufweist, der in einem ordnungsgemäß in den ersten Filterraum eingesetzten Zustand in eine erste Zapfenaufnahme axial hineinragt, sowie ein ringförmiges zweites Filterelement auf, das in einem zweiten Filterraum eine Rohseite von einer Reinseite trennt und das einen bezüglich einer Längsmittelachse des zweiten Filterelements exzentrisch und axial abstehenden zweiten Zapfen aufweist, der in einem ordnungsgemäß in den zweiten Filterraum eingesetzten Zustand in eine zweite Zapfenaufnahme axial hineinragt. Die Filterelemente unterscheiden sich zumindest dadurch voneinander, dass die Zapfen unterschiedliche Exzentrizitäten und/oder Formen aufweisen, wobei sich der jeweilige Filterraum in einem ihm zugehörigen Gehäuse befindet, das jeweils durch eine Konsole, die für jeden Filterraum jeweils einen rohseitigen Zulauf und einen reinseitigen Ablauf aufweist, und einen an der Konsole befestigten Deckel gebildet ist. Bei der bekannten Filteranlage sind gleiche Filterelemente in gleichen Gehäusen fluidisch parallel geschaltet, wobei die zugehörigen Konsolen separate Bauteile sind, die aneinander befestigt sind.

Aus der CA 2 596 225 A1 ist eine andere Filteranlage zur Trinkwasseraufbereitung bekannt, bei der an einem gemeinsamen Verteilerkopf drei Kartuschen austauschbar angebracht sind. Jede Kartusche weist ein eigenes Gehäuse und ein Anschlussstück zum Anschließen der Kartusche an den Verteilerkopf auf. Zwei der Kartuschen enthalten herkömmliche Filterelemente, während die dritte Kartusche ein Umkehrosmoseelement enthält.

Die vorliegende Erfindung beschäftigt sich mit dem Problem, für eine Filteranlage der eingangs genannten Art eine verbesserte Ausführungsform anzugeben, die sich insbesondere dadurch auszeichnet, dass bei reduziertem Bauraumbedarf eine verbesserte Filtrationswirkung erreicht werden kann, wobei weiterhin die Gefahr einer Verwechslung von Filterelementen reduziert sein soll.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Filteranlage, die wenigstens zwei Filterelemente mit exzentrischem Zapfen aufweist, die Zapfen bei Filterelementen, die unterschiedlichen Filtrierfunktionen zugeordnet sind, hinsichtlich Exzentrizität und/oder Form unterschiedlich zu gestalten. Durch die unterschiedlich ausgestalteten bzw. angeordneten Zapfen lässt sich das jeweilige Filterelement nur dort verwenden, wo eine passende Zapfenaufnahme vorhanden ist. Die Gefahr einer Verwechslung der Filterelemente lässt sich dadurch reduzieren.

Durch die Bereitstellung von Filterelementen mit hinsichtlich Exzentrizität und/oder Form unterschiedlichen Zapfen kann in Verbindung mit den komplementär dazu ausgestalteten Zapfenaufnahmen eine Kodierung für die Filterelemente realisiert werden, derart, dass an der jeweiligen Montagestelle nur das richtig kodierte Filterelement ordnungsgemäß eingebaut werden kann, derart, dass der jeweilige Zapfen in die zugehörige komplementäre Zapfenaufnahme ordnungsgemäß eindringt.

Bei einer Filteranlage, die drei oder mehr Filterelemente aufweist, können wenigstens zwei Filterelemente identisch aussehen, während zumindest zwei Filterelemente hinsichtlich Exzentrizität und/oder Form des Zapfens unterschiedlich sind. Ebenso können sämtliche Filterelemente hinsichtlich Form und/oder Exzentrizität des Zapfens verschieden ausgestaltet sein.

Erfindungsgemäß dienen das erste Filterelement und das zweite Filterelement zum Reinigen der gleichen Flüssigkeit, wobei das erste Filterelement als Hauptstromfilter ausgestaltet ist, während das zweite Filterelement als Nebenstromfilter ausgestaltet ist. Denkbar ist beispielsweise eine Filteranlage zum Reinigen eines Schmieröls einer Brennkraftmaschine, die insbesondere in einem Kraftfahrzeug angeordnet sein kann, die zwei parallel arbeitende, identische Filterelemente zum Reinigen eines Hauptstroms des Schmieröls aufweist und die ein weiteres, anderes Filterelement zum Reinigen eines Nebenstroms des Schmieröls aufweist. Das Nebenstrom-Filterelement ist im Vergleich zu den beiden Hauptstrom-Filterelementen für einen deutlich kleineren Volumenstrom und für das Herausfiltern kleinerer Verunreinigungen ausgelegt. Durch die erfindungsgemäße Bauweise kann hier eine Verwechslung der Filterelemente von Hauptstrom und Nebenstrom vermieden werden, so dass die Funktionalität der Hauptstromreinigung und der Nebenstromreinigung besser gewährleistet werden kann. Erfindungsgemäß weisen die zwei Gehäuse der Filteranlage eine gemeinsame Konsole zum Anbringen von zwei oder mehr Filterelementen auf. Hierdurch wird Bauraum eingespart. Gleichzeitig vereinfacht sich die Wartung der Filteranlage, da nur an einem Ort die Filterelemente ausgetauscht werden müssen.

Die Zapfenaufnahme kann beim jeweiligen Filterelement grundsätzlich als Blindloch oder als Sackloch ausgestaltet sein, also abgesehen von der Aufnahme des Zapfens im Grunde keine weitere Funktion aufweisen. Alternativ kann zumindest bei einem Filterelement die Zapfenaufnahme durch einen Einlassbereich eines mit dem Rohraum kommunizierenden Rücklaufs oder Leerlaufs gebildet sein. Hierdurch erhält der Zapfen in Verbindung mit der durch den Rücklauf bzw. Leerlauf gebildeten Zapfenaufnahme eine Zusatzfunktion, nämlich die Sperrung des Rücklaufs bzw. des Leerlaufs beim Eindringen in die Zapfenaufnahme. Bei fehlendem Zapfen oder bei fehlendem Filterelement oder allgemein bei nicht in die Zapfenaufnahme eingesetztem komplementären Zapfen kann über den Zulauf in das Filtergehäuse geförderte Flüssigkeit zu einem wesentlichen Anteil durch den Rücklauf bzw. durch den Leerlauf wieder abfließen, beispielsweise in ein Reservoir, aus dem eine entsprechende Fördereinrichtung die Flüssigkeit zum Zulauf fördert. Auf diese Weise kann sich beispielsweise im Ablauf ein erwünschter Druck nicht aufbauen. Durch die Verwendung der kodierten Filterelemente kann auch hier die Gefahr von Verwechslungen reduziert werden, was einen sicheren Betrieb des mit der Filteranlage ausgestatteten Systems, d.h. Brennkraftmaschine und/oder Kraftfahrzeug, ermöglicht.

Weitere wichtige Merkmale und Vorteile der Erfindung ergeben sich aus den Unteransprüchen, aus den Zeichnungen und aus der zugehörigen Figurenbeschreibung anhand der Zeichnungen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Querschnitt durch eine Filteranlage mit zwei Filterelementen, jeweils im Bereich einer Zapfenaufnahme,
- Fig. 2: eine stark vereinfachte Draufsicht auf eine Rampe,
- Fig. 3 und 4: jeweils stark vereinfachte Ansichten eines Zapfens im Bereich der Rampe bei verschiedenen Ausführungsformen.

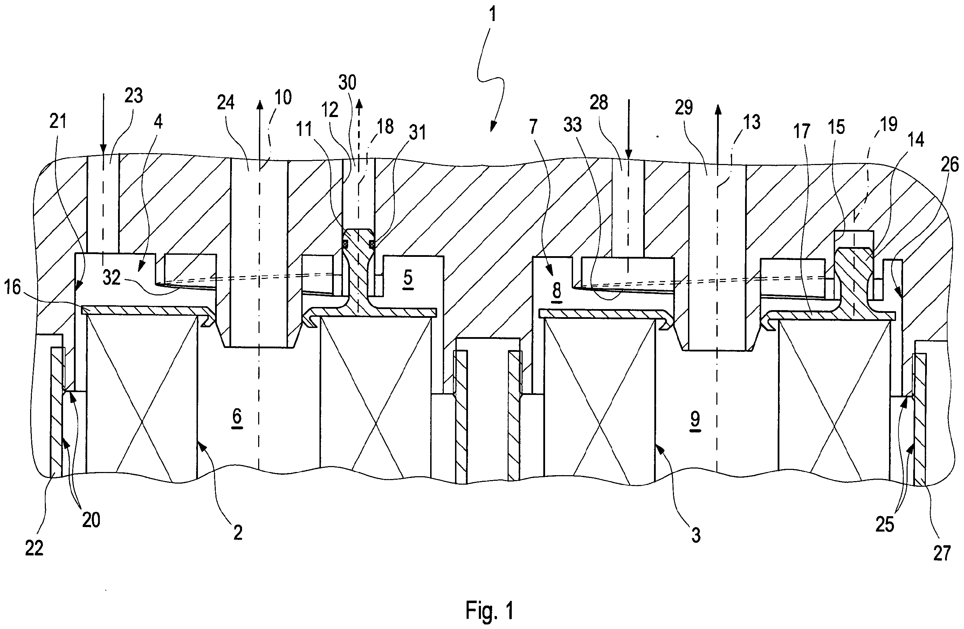

Entsprechend Fig. 1 umfasst eine Filteranlage 1 ein ringförmiges erstes Filterelement 2 und ein ringförmiges zweites Filterelement 3. Grundsätzlich kann noch mindestens ein weiteres ringförmiges Filterelement vorgesehen sein. Die Filteranlage 1 dient zum Filtern einer Flüssigkeit eines Kraftfahrzeugs oder einer Brennkraftmaschine, die bevorzugt in einem Kraftfahrzeug angeordnet sein kann.

Die Filteranlage 1 weist für das erste Filterelement 2 einen ersten Filterraum 4 auf, in den das erste Filterelement 2 eingesetzt ist und in dem das erste Filterelement 2 eine Rohseite 5 von einer Reinseite 6 trennt. Im Beispiel ist das erste Filterelement 2 radial von außen nach innen durchströmt, so dass sich die Reinseite 6 im Inneren des ersten Filterelements 2 findet. Entsprechendes gilt auch für das zweite Filterelement 3. Es ist in einen zweiten Filterraum 7 eingesetzt und trennt darin eine Rohseite 8 von einer Reinseite 9, die hier ebenfalls im Inneren des zweiten Filterelements 3 angeordnet ist.

Das erste Filterelement 2 weist einen bezüglich einer Längsmittelachse 10 des ersten Filterelements 2 axial und exzentrisch abstehenden ersten Zapfen 11 auf, der in eine erste Zapfenaufnahme 12 axial hineinragt, wenn das erste Filterelement 2 ordnungsgemäß in den ersten Filterraum 4 eingesetzt ist. Analog dazu weist auch das zweite Filterelement 3 einen bezüglich einer Längsmittelachse 13 des zweiten Filterelements 3 axial und exzentrisch abstehenden zweiten Zapfen 14 auf, der in eine zweite Zapfenaufnahme 15 axial hineinragt, wenn das zweite Filterelement 3 ordnungsgemäß in den zweiten Filterraum 7 eingesetzt ist. Der erste Zapfen 11 ist an einer axialen Endscheibe 16 des ersten Filterelements 2 ausgebildet. Ebenso ist der zweite Zapfen 14 an einer axialen Endscheibe 17 des zweiten Filterelements 3 ausgebildet.

Bei den hier gezeigten Beispielen ist der jeweilige Zapfen 11, 14 vorzugsweise an der jeweiligen Endscheibe 16, 17 ausgebildet. Beispielsweise ist der Zapfen 11, 14 an der zugehörigen Endscheibe 16, 17 integral ausgeformt. Ebenso kann der Zapfen 11, 14 ganz oder teilweise an die zugehörige Endscheibe 16, 17 angebaut sein.

Um Verwechslungen zwischen den beiden Filterelementen 2, 3 vermeiden zu können, unterscheiden sich diese zumindest im Bereich der Zapfen 11, 14 voneinander. Hierzu können die Zapfen 11, 14 unterschiedliche Exzentrizitäten aufweisen. Zusätzlich oder alternativ können sich die Zapfen 11, 14 hinsichtlich ihrer Form voneinander unterscheiden. Im gezeigten Beispiel besitzt der erste Zapfen 11 des ersten Filterelements 2 eine kleinere Exzentrizität als der zweite Zapfen 14 des zweiten Filterelements 3. Die Exzentrizität ist dabei der Abstand zwischen der Längsmittelachse 10, 13 des jeweiligen Filterelements 2, 3 und einer Längsmittelachse 18 bzw. 19 des jeweiligen Zapfens 11, 14. Im Beispiel ist außerdem eine unterschiedliche Formgebung für die Zapfen 11, 14 angedeutet. Beispielsweise kann der erste Zapfen 11 axial länger ausgebildet sein als der zweite Zapfen 14. Im Beispiel besitzt der erste Zapfen 11 außerdem einen kleineren Querschnitt als der zweite Zapfen 14.

Sofern bei einer anderen Ausführungsform mehr als zwei Filterelemente 2, 3 vorgesehen sind, kann somit wenigstens ein weiteres ringförmiges Filterelement vorgesehen sein, das ebenfalls in einem zugehörigen weiteren Filterraum eine Rohseite von einer Reinseite trennt und das, bevorzugt an einer axialen Endscheibe, ebenfalls einen axial und bezüglich einer Längsmittelachse des jeweiligen Filterelements exzentrisch abstehenden weiteren Zapfen aufweisen kann. Ebenso kann dieses weitere Filterelement ohne derartigen Zapfen ausgestattet sein. Sofern jedoch auch das weitere Filterelement mit einem solchen Zapfen ausgestattet ist, ragt dieser in eine zugehörige weitere Zapfenaufnahme axial hinein, wenn das weitere Filterelement ordnungsgemäß in den weiteren Filterraum eingesetzt ist. Bei drei oder mehr Filterelementen 2, 3, die jeweils einen Zapfen 11, 14 aufweisen, können nun die Zapfen 11, 14 bei allen Filterelementen 2, 3 hinsichtlich Exzentrizität und/oder Form unterschiedlich sein. Ebenso ist eine Ausführungsform möglich, bei der zumindest bei zwei Filterelementen die Zapfen hinsichtlich Exzentrizität und/oder Form gleich sind. Beispielsweise kann die Filteranlage 1 zwei gleiche Filterelemente zum Filtern eines Hauptstroms verwenden, bei denen eine Verwechslung keine Auswirkungen hat.

Entsprechend Fig. 1 befindet sich der erste Filterraum 4 in einem ersten Gehäuse 20, das eine erste Konsole 21 und einen ersten Deckel 22 umfasst. Die erste Konsole 21 weist einen mit der Rohseite kommunizierenden rohseitigen ersten Zulauf 23 und einen mit der Reinseite 6 kommunizierenden reinseitigen ersten Ablauf 24 auf. Der erste Deckel 22 ist an der ersten Konsole 21 befestigbar, z.B. mittels eines Schraubverschlusses oder eines Bajonettverschlusses.

Auf entsprechende Weise ist der zweite Filterraum 7 in einem zweiten Gehäuse 25 ausgebildet, das eine zweite Konsole 26 und einen zweiten Deckel 27 aufweist. Die zweite Konsole 26 besitzt ebenfalls einen mit der zugehörigen Rohseite 8 kommunizierenden rohseitigen zweiten Zulauf 28 und einen mit der zugehörigen Reinseite 9 kommunizierenden reinseitigen zweiten Ablauf 29. Der zweite Deckel 27 ist an der zweiten Konsole 26 befestigbar. Im gezeigten Beispiel besitzen die beiden Gehäuse 20, 25 eine gemeinsame Konsole 21, 26. Ebenso ist eine Ausführungsform denkbar, bei der jedes Gehäuse 20, 25 eine separate Konsole 21, 26 aufweist. Die hier gezeigte gemeinsamen Konsole 21, 26 weist somit die beiden Zuläufe 23, 28, die beiden Abläufe 24, 29 und die beiden Filterräume 4, 7 auf. Die beiden Deckel 22, 27 sind jedoch separat, so dass die Filterelemente 2, 3 separat und unabhängig voneinander ausgetauscht werden können.

Bei der in Fig. 1 gezeigten exemplarischen Ausführungsform ist die zweite Zapfenaufnahme 15 als Blindloch ausgestaltet. Insbesondere besitzt dieses Blindloch bzw. die zweite Zapfenaufnahme 15 neben der Fähigkeit den zweiten Zapfen 14 aufzunehmen somit keine weitere Funktionalität. Im Unterschied dazu ist die erste Zapfenaufnahme 12 durch einen Einlassbereich eines Rücklaufs oder Leerlaufs 30 gebildet, der in die erste Konsole 21 bzw. hier in die gemeinsame Konsole 21, 26 eingearbeitet ist und der mit dem ersten Rohraum 5 kommuniziert. Der erste Zapfen 11 erfüllt hier zusätzlich die Funktion, den Leerlauf bzw. den Rücklauf 30 zu verschließen, wenn er in die erste Zapfenaufnahme 12, also in den Einlassbereich des Rücklaufs oder Leerlaufs 30 eingesteckt ist. Der erste Zapfen 11 kann hierzu mit einer entsprechenden Radialdichtung 31 ausgestattet sein, bei der es sich beispielsweise um einen O-Ring handelt. Beim zweiten Zapfen 14, der lediglich mit einer als Blindloch ausgestalteten zweiten Zapfenaufnahme 15 zusammenwirkt, ist eine derartige Radialdichtung nicht erforderlich. Es ist klar, dass auch die zweite Zapfenaufnahme 15 durch einen Rücklauf oder Leerlauf gebildet sein kann.

Gemäß Fig. 1 können die Filterelement 2, 3 im jeweiligen Filtergehäuse 20, 25 hängend angeordnet sein. Es ist klar, dass grundsätzlich auch eine stehende Anordnung für die Filterelemente 2, 3 im jeweiligen Filtergehäuse 20, 25 möglich ist. Ferner kann auch eine liegende Anordnung für die Filterelemente 2, 3 im jeweiligen Filtergehäuse 20, 25 realisiert werden. Die Begriffe "hängend", "stehend" und "liegend" orientieren sich dabei an horizontalen bzw. vertikalen Umgebungsachsen.

Gemäß Fig. 1 kann zumindest einer der Zapfenaufnahmen 12, 15 eine Rampe 32 beziehungsweise 33 zugeordnet sein. Im Beispiel ist hier jeder Zapfenaufnahme 12, 15 eine solche Rampe 32, 33 zugeordnet. Die jeweilige Rampe 32, 33 ist kreisbahnförmig ausgestaltet und führt zur jeweiligen Zapfenaufnahme 12, 15 hin. Hierzu fällt die Rampe 32, 33 schraubenförmig zur Zapfenaufnahme 12, 15 hin ab. Entlang der jeweiligen Rampe 32, 33 kann der zugehörige Zapfen 11, 14 beim Eindrehen des Filterelements 2, 3 abgleiten. Mit Hilfe einer derartigen Rampe 32, 33 wird das Einführen des jeweiligen Zapfens 11, 14 in die zugehörige Zapfenaufnahme 12, 15 erheblich vereinfacht. Erkennbar unterscheiden sich die beiden Rampen 32, 33 hier über ihren jeweiligen Radius, der komplementär zur Exzentrizität des zugehörigen Zapfens 11, 14 gewählt ist.

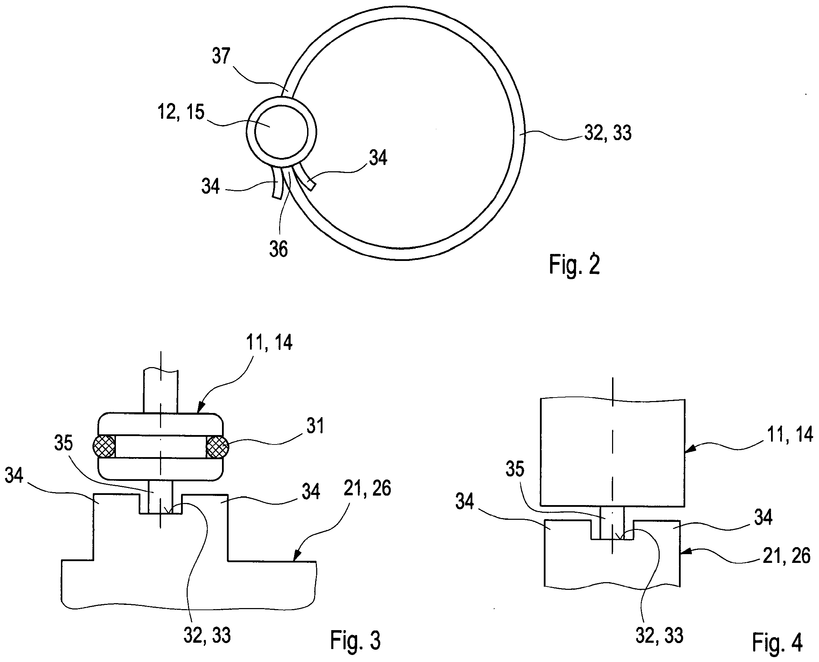

Sofern die Filteranlage 1 mit wenigstens einer derartigen Rampe 32, 33 ausgestattet ist, lässt sich insbesondere auch eine in den Fig. 2 bis 4 näher erläuterte besondere Ausführungsform zumindest bei einer dieser Rampen 32, 33 realisieren. Bei diesen speziellen Ausführungsformen sind die jeweilige Rampe 32, 33 und der zugehörige Zapfen 11, 14 so ausgestaltet und aufeinander abgestimmt, dass sie nach dem Schlüssel-Schloss-Prinzip zusammenwirken. Dieses Schlüssel-Schloss-Prinzip bewirkt, dass nur solche Filterelemente 2, 3 ordnungsgemäß mit der Filteranlage 1 verwendbar sind, bei denen der Zapfen 11, 14 speziell an die Rampe 32, 33 adaptiert ist. Die hierbei relevante ordnungsgemäße Verwendung beinhaltet, dass der jeweilige Zapfen 11, 14 beim Anbringen beziehungsweise beim Drehen des Filterelements 2, 3 selbsttätig die Zapfenaufnahme 12 beziehungsweise 15 findet und darin eindringt. Bei nicht speziell an die Filteranlage 1 adaptiertem Filterelement 2, 3 verhindert das Schlüssel-Schloss-Prinzip, dass der gegebenenfalls vorhandene Zapfen 11, 14, auch wenn er eine passende Exzentrizität aufweist, beim Aufschrauben beziehungsweise beim Eindrehen des Filterelements 2, 3 die Zapfenaufnahme 12, 15 selbsttätig finden kann. Hierdurch soll erreicht werden, dass nur für die Filteranlage 1 genau adaptierte Filterelemente 2, 3 verwendet werden können, beispielsweise um eine ordnungsgemäße Filtrierfunktion gewährleisten zu können.

Zur Realisierung dieses Schlüssel-Schloss-Prinzips kann entsprechend den Fig. 2 bis 4 eine Einführkontur mit Führungskörpern 34 vorgesehen sein, die einerseits oder beiderseits der Rampe 32, 33 angeordnet sein können und axial über die Rampe 32, 33 vorstehen. Ein entlang der Rampe 32, 33 abgleitender Zapfen 11, 14 kann nur dann bis zur zugehörigen Zapfenaufnahme 12, 15 gelangen, wenn er einen an diese Führungskörper 34 adaptierten, axial vom jeweiligen Zapfen 11, 14 abstehenden Vorsprung 35 aufweist. Bei diesem Vorsprung 35 handelt es sich beispielsweise um einen kegelförmigen oder stiftförmigen oder stegförmigen Ansatz, der den Kontakt zwischen dem Zapfen 11, 14 und der Rampe 32, 33 herstellt. Dieser Vorsprung 35 ist axial so dimensioniert, dass er den Zapfen 11, 14 über die Führungselemente 34 hinwegheben kann. Das heißt, der über den Vorsprung 35 auf der Rampe 32, 33 abgleitende Zapfen 11, 14 ist axial von den Führungskörpern 34 so weit beabstandet, dass er an den Führungskörpern 34 vorbei fluchtend zur Zapfenaufnahme 12, 15 ausrichtbar ist. Entsprechend den Fig. 2 bis 4 kann dieser Vorsprung 35 zwischen den Führungskörpern 34 hindurch die Rampe 32, 33 kontaktieren und dadurch das Abgleiten des Zapfens 11, 14 ermöglichen.

Gemäß Fig. 2 sind die Führungskörper 34 im Bereich eines unteren Rampenendes 36 angeordnet. Die Zapfenaufnahme 12, 15 ist dabei in Umfangsrichtung zwischen dem unteren Rampenende 36 und einem oberen Rampenende 37 angeordnet, das entlang der Rampe 32, 33 schraubenförmig entlang einer Kreisbahn zum unteren Rampenende 36 abfällt.

Im Übrigen wird hinsichtlich des Schlüssel-Schloss-Prinzips und hinsichtlich seiner Realisierung auf die eingangs genannte EP 1 229 985 B1 verwiesen.

Wie bereits erwähnt, können das erste Filterelement 2 und das zweite Filterelement 3 zum Reinigen der gleichen Flüssigkeit dienen, wobei das erste Filterelement 2 als Hauptstromfilter ausgestaltet ist, während das zweite Filterelement 3 als Nebenstromfilter ausgestaltet ist. Ebenso können zwei parallel arbeitende Hauptstromfilter vorgesehen sein, die insbesondere hinsichtlich ihres Zapfens identisch ausgestaltet sein können. Eine derartige Filteranlage 1 ist beispielsweise für einen Schmierölkreis einer Brennkraftmaschine bei einem Nutzfahrzeug denkbar. Dort können beispielsweise zwei identische Filterelemente als Hauptstromfilter dienen, während ein weiteres, im Hinblick auf den Zapfen unterschiedliches Filterelement als Nebenstromfilter dient.

Des Weiteren ist grundsätzlich auch eine nicht erfindungsgemäße Ausführungsform möglich, bei welcher das erste Filterelement 2 zum Reinigen einer ersten Flüssigkeit, zum Beispiel Schmieröl, ausgestaltet ist, während das zweite Filterelement 3 zum Reinigen einer von der ersten Flüssigkeit unterschiedlichen zweiten Flüssigkeit, zum Beispiel Kraftstoff, ausgestaltet ist. Andere Flüssigkeitssysteme, bei denen die Verwendung einer derartigen Filteranlage 1 in Betracht kommt, sind beispielsweise bei einer Brennkraftmaschine ein Kühlmittelkreis und bei einem Kraftfahrzeug ein Bremsflüssigkeitskreis sowie beliebige andere Hydraulikkreise.

## Patentansprüche

1. Filteranlage zum Filtern einer Flüssigkeit einer Brennkraftmaschine und/oder eines Fahrzeugs,
- mit einem ringförmigen ersten Filterelement (2), das in einem ersten Filterraum (4) eine Rohseite (5) von einer Reinseite (6) trennt und das einen bezüglich einer Längsmittelachse (10) des ersten Filterelements (2) exzentrisch und axial abstehenden ersten Zapfen (11) aufweist, der in einem ordnungsgemäß in den ersten Filterraum (4) eingesetzten Zustand in eine erste Zapfenaufnahme (12) axial hineinragt,
- mit einem ringförmigen zweiten Filterelement (3), das in einem zweiten Filterraum (7) eine Rohseite (8) von einer Reinseite (9) trennt und das einen bezüglich einer Längsmittelachse (13) des zweiten Filterelements (3) exzentrisch und axial abstehenden zweiten Zapfen (14) aufweist, der in einem ordnungsgemäß in den zweiten Filterraum (7) eingesetzten Zustand in eine zweite Zapfenaufnahme (15) axial hineinragt,
- wobei sich die Filterelemente (2, 3) zumindest dadurch voneinander unterscheiden, dass die Zapfen (11, 14) unterschiedliche Exzentrizitäten und/oder Formen aufweisen,
- wobei sich der jeweilige Filterraum (4, 7) in einem ihm zugehörigen Gehäuse (20, 25) befindet, das jeweils durch eine Konsole (21, 26), die für jeden Filterraum (4, 7) jeweils einen rohseitigen Zulauf (23, 28) und einen reinseitigen Ablauf (24, 29) aufweist, und einen an der Konsole (21, 26) befestigten Deckel (22, 27) gebildet ist, **dadurch gekennzeichnet,**
- **dass** das erste Filterelement (2) und das zweite Filterelement (3) zum Reinigen der gleichen Flüssigkeit dienen, wobei das erste Filterelement (2) als Hauptstromfilter ausgestaltet ist, während das zweite Filterelement (3) als Nebenstromfilter ausgestaltet ist,
- **dass** die zwei Gehäuse (20, 25) eine gemeinsame Konsole aufweisen.

2. Filteranlage nach Anspruch 1,
**dadurch gekennzeichnet,**
**dass** die unterschiedlichen Formen der Zapfen (11, 14) durch verschiedene Querschnitte und/oder axiale Längen gebildet sind.

3. Filteranlage nach Anspruch 1 oder 2,
**dadurch gekennzeichnet,**
**dass** wenigstens ein weiteres ringförmiges Filterelement vorgesehen ist, das jeweils in einem zugehörigen weiteren Filterraum eine Rohseite von einer Reinseite trennt und das keinen oder einen bezüglich einer Längsmittelachse des jeweiligen Filterelements exzentrisch und axial abstehenden weiteren Zapfen aufweist, der gegebenenfalls in einem ordnungsgemäß in den weiteren Filterraum eingesetzten Zustand in eine zugehörige weitere Zapfenaufnahme axial hineinragt, wobei die Zapfen hinsichtlich Exzentrizität und/oder Form bei allen Filterelementen (2, 3) unterschiedlich sind oder bei wenigstens zwei Filterelementen gleich sind.

4. Filteranlage nach einem der Ansprüche 1 bis 3,
**dadurch gekennzeichnet,**
**dass** zumindest eine der Zapfenaufnahmen (12, 15) einer kreisbahnförmige Rampe (32, 33) zugeordnet ist, zwischen deren unteren und oberen Enden (36, 37) die jeweilige Zapfenaufnahme (12, 15) angeordnet ist und auf der der Zapfen (11, 14) des zugehörigen Filterelements (2, 3) beim Einsetzen des jeweiligen Filterelements (2, 3) in den jeweiligen Filterraum (4, 7) abgleiten kann, während sich das jeweilige Filterelement (2, 3) um seine Längsmittelachse (10, 13) dreht.

5. Filteranlage nach einem der Ansprüche 1 bis 4,
**dadurch gekennzeichnet,**
- **dass** zumindest eine der Zapfenaufnahmen (12, 15) als Blindloch ausgestaltet ist, und/oder
- **dass** zumindest eine der Zapfenaufnahmen (12, 15) durch einen Einlassbereich eines rohseitigen Rücklaufs (30) oder eines rohseitigen Leerlaufs (30) gebildet ist.

6. Brennkraftmaschine, insbesondere in einem Kraftfahrzeug, mit wenigstens einem Flüssigkeitssystem, wie zum Beispiel Kraftstoffversorgung, Schmierölkreis und Kühlmittelkreis, und mit einer Filteranlage (1) nach einem der Ansprüche 1 bis 5, die in wenigstens eines dieser Flüssigkeitssysteme eingebunden ist.

7. Fahrzeug mit wenigstens einem Flüssigkeitssystem, wie zum Beispiel Kraftstoffversorgung, Schmierölkreis, Kühlmittelkreis, jeweils einer Brennkraftmaschine, sowie Bremsflüssigkeitskreis und Hydraulikkreis, und mit einer Filteranlage (1) nach einem der Ansprüche 1 bis 5, die in wenigstens eines dieser Flüssigkeitssysteme eingebunden ist.

## Claims

1. Filter system for filtering a fluid of an internal combustion engine and/or a vehicle,
- with an annular first filter element (2), which in a first filter chamber (4) separates a dirty side (5) from a clean side (6) and which comprises a first pin (11) protruding eccentrically and axially with respect to a longitudinal central axis (10) of the first filter element (2), and which in a properly inserted state in the first filter chamber (4) projects axially into a first pin receptacle (12),
- with an annular second filter element (3), which in a second filter chamber(7) separates a dirty side (8) from a clean side (9) and which comprises a second pin (14) protruding eccentrically and axially with respect to a longitudinal central axis (13) of the second filter element (3), and which in a properly inserted state in the second filter chamber (7) projects axially into a second pin receptacle (15),
- wherein the filter elements (2, 3) differ from one another at least in that the pins (11, 14) have different eccentricities and/or shapes,
- wherein the respective filter chamber (4, 7) is disposed in a housing (20, 25) associated with it, which is respectively formed by a control panel (21, 26), which for each filter chamber (4, 7) respectively comprises a dirty side inflow (23, 28) and a clean side outflow (24, 29), and a cover (22, 27) fastened to the control panel (21, 26),
**characterised in that**
- the first filter element (2) and the second filter element (3) serve for the cleaning of the same fluid, wherein the first filter element (2) is designed as a main stream filter while the second filter element (3) is designed as a subsidiary stream filter,
- the two housings (20, 25) have a common control panel.

2. Filter system according to claim 1, **characterised in that** the different shapes of the pins (11, 14) are formed by different cross-sections and/or axial lengths.

3. Filter system according to claim 1 or 2, **characterised in that** at least one further annular filter element is provided, which in an associated further filter chamber respectively separates a clean side from a dirty side and which comprises no further pin or a further pin protruding eccentrically and axially with respect to a longitudinal central axis of the respective filter element, which pin optionally projects axially in a properly inserted state in the further filter chamber into an associated further pin receptacle, wherein the pins differ as regards eccentricity and/or shape in all filter elements (2, 3) or are identical in at least two filter elements.

4. Filter system according to one of claims 1 to 3, **characterised in that** at least one of the pin receptacles (12, 15) is associated with a circular shaped ramp (32, 33), between whose lower and upper ends (36, 37) the respective pin receptacle (12, 15) is arranged and on which the pin (11, 14) of the associated filter element (2, 3) can slide when the respective filter element (2, 3) is inserted into the respective filter chamber (4, 7), while the respective filter element (2, 3) rotates about its longitudinal central axis (10, 13).

5. Filter system according to one of claims 1 to 4, **characterised in that**,
- at least one of the pin receptacles (12, 15) is configured as a blind hole, and/or
- at least one of the pin receptacles (12, 15) is formed by an inlet region of a dirty side return (30) or a dirty side idling (30).

6. Internal combustion engine, in particular in a vehicle, with at least one fluid system, such as for example a fuel supply, lubricating oil circuit and coolant circuit, and with a filter system (1) according to one of claims 1 to 5, which is incorporated in at least one of these fluid systems.

7. Vehicle with at least one fluid system, such as for example a fuel supply, lubricating oil circuit, coolant circuit, respectively of an internal combustion engine, as well as a brake fluid circuit and hydraulics circuit, and with a filter system (1) according to one of claims 1 to 5, which is incorporated in at least one of these fluid systems.

## Revendications

1. Dispositif de filtrage pour le filtrage d'un fluide d'un moteur à combustion interne et/ou d'un véhicule,
- avec un premier élément de filtrage (2) annulaire, qui sépare un côté brut (5) d'un côté épuré (6) dans une première chambre de filtrage (4) et qui présente une première broche (11) en saillie axiale et excentrique par rapport à un axe médian longitudinal (10) du premier élément de filtrage (2), qui pénètre axialement dans un premier logement de broche (12) dans un état inséré correctement dans la première chambre de filtrage (4),
- avec un deuxième élément de filtrage (3) annulaire, qui sépare un côté brut (8) d'un côté épuré (9) dans une deuxième chambre de filtrage (7) et qui présente une deuxième broche (14) en saillie axiale et excentrique par rapport à un axe médian longitudinal (13) du deuxième élément de filtrage (3), qui pénètre axialement dans un deuxième logement de broche (15) dans un état inséré correctement dans la deuxième chambre de filtrage (7),
- dans lequel les éléments de filtrage (2, 3) se distinguent l'un de l'autre du moins par le fait que les broches (11, 14) présentent différentes excentricités et/ou formes,
- dans lequel la chambre de filtrage (4, 7) respective se trouve dans un boîtier (20, 25) lui appartenant, qui est formé respectivement par une console (21, 26), qui présente pour chaque chambre de filtrage (4, 7) respectivement une amenée côté brut (23, 28) et une sortie côté épuré (24, 29), et un couvercle (22, 27) fixé à la console (21, 26),
**caractérisé en ce**
- **que** le premier élément de filtrage (2) et le deuxième élément de filtrage (3) servent au nettoyage du même fluide, dans lequel le premier élément de filtrage (2) est configuré sous forme de filtre à courant principal, alors que le deuxième élément de filtrage (3) est configuré sous forme de filtre en dérivation,
- **que** les deux boîtiers (20, 25) présentent une console commune.

2. Dispositif de filtrage selon la revendication 1,
**caractérisé en ce**
**que** les différentes formes des broches (11, 14) sont formées par différentes sections transversales et/ou longueurs axiales.

3. Dispositif de filtrage selon la revendication 1 ou 2,
**caractérisé en ce**
**qu'**au moins un autre élément de filtrage annulaire est prévu, qui sépare un côté brut d'un côté épuré respectivement dans une autre chambre de filtrage afférente et qui ne présente pas ou une autre broche en saillie axiale et excentrique par rapport à un axe médian longitudinal de l'élément de filtrage respectif, qui le cas échéant pénètre axialement dans un autre logement de broche afférent dans un état inséré correctement dans l'autre chambre de filtrage,
dans lequel les broches sont différentes en termes d'excentricité et/ou de forme pour tous les éléments de filtrage (2, 3) ou sont identiques pour au moins deux éléments de filtrage.

4. Dispositif de filtrage selon l'une quelconque des revendications 1 à 3, **caractérisé en ce**
**qu'**au moins un des logements de broche (12, 15) est affecté à une rampe en forme d'orbite (32, 33), entre les extrémités inférieure et supérieure (36, 37) de laquelle le logement de broche (12, 15) respectif est agencé et sur laquelle la broche (11, 14) de l'élément de filtrage (2, 3) afférent peut glisser lors de l'insertion de l'élément de filtrage (2, 3) respectif dans la chambre de filtrage (4, 7) respective, alors que l'élément de filtrage (2, 3) respectif tourne autour de son axe médian longitudinal (10, 13).

5. Dispositif de filtrage selon l'une quelconque des revendications 1 à 4, **caractérisé en ce**
- **qu'**au moins un des logements de broche (12, 15) est configuré sous forme de trou borgne, et/ou
- **qu'**au moins un des logements de broche (12, 15) est formé par une zone d'entrée d'un retour côté brut (30) ou d'une marche à vide côté brut (30).

6. Moteur à combustion interne, en particulier dans un véhicule automobile, avec au moins un système de fluide, comme par exemple l'alimentation en carburant, le circuit d'huile de lubrification et le circuit de refroidissement, et avec un dispositif de filtrage (1) selon l'une quelconque des revendications 1 à 5, qui est intégré dans au moins un de ces systèmes de fluide.

7. Véhicule avec au moins un système de fluide, comme par exemple l'alimentation en carburant, le circuit d'huile de lubrification, le circuit de refroidissement, respectivement d'un moteur à combustion interne, ainsi que le circuit de liquide de frein et le circuit hydraulique, et avec un dispositif de filtrage (1) selon l'une quelconque des revendications 1 à 5, qui est intégré dans au moins un de ces systèmes de fluide.
